# EUROPÄISCHE PATENTSCHRIFT

(11) **EP 3 424 755 B1**
(45) Veröffentlichungstag und Bekanntmachung des Hinweises auf die Patenterteilung: **25.03.2020**
(21) Anmeldenummer: 18181687.7
(22) Anmeldetag: 04.07.2018
(51) Int. Cl.: B60C 23/00

(54) **DREHDURCHFÜHRUNG FÜR EINE REIFENFÜLLANLAGE**
ROTARY UNION FOR A TYRE INFLATION SYSTEM
PASSAGE TOURNANT POUR UNE INSTALLATION DE GONFLAGE DE PNEUS

(30) Priorität: 06.07.2017 DE 102017211574
(43) Veröffentlichungstag der Anmeldung: 09.01.2019
(73) Patentinhaber: Deere & Company, Moline, IL 61265 (US)
(72) Erfinder: Buhrke, Frank, 68163 Mannheim (DE)
(74) Vertreter: Dehnhardt, Florian Christopher

(56) Entgegenhaltungen:
- EP-A1- 3 164 273
- DE-A1-102013 207 855
- GB-A- 702 621

## Beschreibung

Die Erfindung betrifft eine Drehdurchführung für eine Reifenfüllanlage.
Eine derartige Drehdurchführung ist beispielsweise aus der US 5 253 688 A bekannt. Die Drehdurchführung umgibt eine Radachse, die innerhalb eines Achskörpers drehbar gelagert ist, und umfasst zwei konzentrisch zueinander angeordnete Ringkörper, zwischen denen ein umlaufender Ringspalt ausgebildet ist. Dieser Ringspalt wird mittels zugehöriger Dichtungen in zwei separate Verbindungskammern unterteilt, die jeweils der Zufuhr von Druckluft über daran angeschlossene Verbindungsleitungen dienen. Hierbei ist der innere Ringkörper drehfest mit der Radachse und der äußere Ringkörper drehfest an einer außenliegenden Stirnseite des Achskörpers befestigt.
Aufgrund der außenliegenden Anordnung der Ringkörper ist die Drehdurchführung von Seiten der Radachse vergleichsweise hohen Biegebeanspruchungen ausgesetzt, was zum frühzeitigen Verschleiß der im Ringspalt angeordneten Dichtungen und damit letztlich zu Betriebsausfällen der Drehdurchführung führen kann.

Weitere Drehdurchführungen sind bekannt aus DE 10 2013 207855 A1 und GB 702 621 A.

Es ist Aufgabe der vorliegenden Erfindung, eine Drehdurchführung der eingangs genannten Art hinsichtlich ihrer Betriebssicherheit zu verbessern.
Diese Aufgabe wird durch eine Drehdurchführung für eine Reifenfüllanlage mit den Merkmalen des Patentanspruchs 1 gelöst. Die Drehdurchführung für eine Reifenfüllanlage umfasst ein Achsgehäuse und eine in dem Achsgehäuse drehbar gelagerte Radachse, die einen Radbefestigungsflansch zur Anbringung einer Radfelge aufweist, wobei die Radachse zumindest abschnittsweise von einer drehfest mit der Radachse verbundenen Durchführungsmuffe aufgenommen ist, die sich mittels eines Radiallagers gegenüber einem Lagersitz innerhalb des Achsgehäuses abstützt, wobei ein innerhalb einer zylindrischen Wandung der Durchführungsmuffe verlaufender Druckluftkanal vorgesehen ist, der einerseits mit einem an dem Achsgehäuse angebrachten Druckanschluss und andererseits mit einem an der Durchführungsmuffe angebrachten Reifenanschluss kommuniziert, wobei die Durchführungsmuffe gegenüber einer angrenzenden Innenseite des Achsgehäuses drehbeweglich derart abgedichtet ist, dass zwischen dem Druckanschluss und dem Druckluftkanal eine luftdicht abgeschlossene Verbindungskammer ausgebildet ist.

Aufgrund der radialen Abstützung der Durchführungsmuffe innerhalb des Achsgehäuses lassen sich Biegebeanspruchungen, die von Seiten der Radachse auf die Drehdurchführung wirken, effektiv reduzieren. Dies führt zu einem verringerten Verschleiß der zwischen Durchführungsmuffe und Achsgehäuse vorgesehenen drehbeweglichen Abdichtung und damit zu einer entsprechenden Verbesserung der Betriebssicherheit der Drehdurchführung.

Zur Minimierung der auf die Drehdurchführung wirkenden Biegemomente ist es ferner von Vorteil, wenn der Lagersitz innerhalb des Achsgehäuses bezüglich der Position der drehbeweglichen Abdichtung möglichst weit außenliegend, d.h. in Richtung des Radbefestigungsflanschs angeordnet ist.

Die drehbewegliche Abdichtung verhindert hierbei einen unkontrollierten Austritt von Druckluft aus dem Achsgehäuse bzw. der Verbindungskammer in die Umgebung. Zur Herstellung der drehbeweglichen Abdichtung findet typischerweise ein elastischer Dichtungsring Verwendung, der in einen zwischen einer zylindrischen Außenseite der Durchführungsmuffe und einer zylindrischen Innenseite des Achsgehäuses gebildeten Ringspalt eingebracht ist.
Weitere vorteilhafte Ausgestaltungen der erfindungsgemäßen Drehdurchführung gehen aus den Unteransprüchen hervor.

Die Verbindungskammer ist als Hohlraum innerhalb des vorzugsweise als Stahlgussteil hergestellten Achsgehäuses ausgebildet. Der Hohlraum grenzt an eine innenliegende Stirnseite der Durchführungsmuffe an, wobei der Druckluftkanal als an der innenliegenden Stirnseite der Durchführungsmuffe in den Hohlraum mündende Längsbohrung ausgebildet sein kann. An den Hohlraum kann sich ein weiterer Lagersitz zur Aufnahme eines weiteren Radiallagers anschließen, das der innenliegenden Abstützung der Radachse gegenüber dem Achsgehäuse dient.
Die Durchführungsmuffe kann sich ausgehend von dem Hohlraum in Richtung einer außenliegenden Stirnseite des Achsgehäuses erstrecken und dort einen schützenden Außenkragen aufweisen. Der Außenkragen ist einstückiger Bestandteil der als Stahlgussteil hergestellten Durchführungsmuffe.
Des Weiteren besteht die Möglichkeit, dass ein weiterer Druckanschluss an dem Achsgehäuse angebracht ist, wobei der weitere Druckanschluss in einen mit dem Druckluftkanal kommunizierenden Ringkanal mündet, der durch ein zwischen einer zylindrischen Außenseite der Durchführungsmuffe und einer zylindrischen Innenseite des Achsgehäuses verlaufendes elastisches Dichtungsringpaar gebildet ist. Das elastische Dichtungsringpaar wird beispielsweise mittels zugehöriger Befestigungsringe, die in umlaufende Nuten entlang der zylindrischen Außenseite der Durchführungsmuffe eingreifen, in seiner vorgegebenen Position gehalten.

Bei dem Druckanschluss kann es sich um einen Entlüftungsanschluss zum Ablassen von Luft aus einem mit dem Reifenanschluss verbundenen Fahrzeugreifen und bei dem weiteren Druckanschluss um einen Luftzufuhranschluss zur Befüllung des Fahrzeugreifens mit Druckluft aus einem von der Reifenfüllanlage umfassten Kompressor handeln.

Um das Tempo beim Befüllen des Fahrzeugreifens zu erhöhen, können mehrere bzw. weitere innerhalb der zylindrischen Wandung der Durchführungsmuffe verlaufende Druckluftkanäle vorgesehen sein, wobei jedem der Druckluftkanäle ein separater weiterer Druckanschluss und/oder Reifenanschluss zugeordnet ist. Hierbei mündet jeder der weiteren Druckanschlüsse in einen mit dem betreffenden Druckluftkanal kommunizierenden separaten Ringkanal. Die Ringkanäle sind jeweils durch zugehörige elastische Dichtungsringpaare voneinander getrennt. Die Druckluftkanäle lassen sich beim Befüllen des Fahrzeugreifens parallel schalten, so dass entsprechend hohe Durchflussraten erzielbar sind. Andererseits ist es auch möglich, dass ein erster Reifenanschluss über ein an einer Radfelge montiertes Pneumatikventil mit dem Fahrzeugreifen und ein zweiter Reifenanschluss mit einem Steuereingang des Pneumatikventils verbunden ist. Die Verwendung eines derartigen Pneumatikventils ist bei den meisten gängigen Reifenfüllanlagen üblich. Mögliche Kompatibilitätsprobleme im Falle einer Nachrüstung der Drehdurchführung lassen sich so vermeiden.

Um eine strukturelle Schwächung der Durchführungsmuffe so gering wie möglich zu halten, kann vorgesehen sein, dass die Druckluftkanäle entlang des Umfangs der zylindrischen Wandung der Durchführungsmuffe gleichmäßig verteilt angeordnet sind.

Der Reifenanschluss kann von außen leicht zugänglich in einem an der Durchführungsmuffe ausgebildeten Außenkragen angebracht sein. Zu diesem Zweck ist der Reifenanschluss insbesondere in einem Winkel von 30 bis 60 Grad gegenüber dem Verlauf der Längsbohrung des Druckluftkanals geneigt. Eine in die Längsbohrung einmündende Schrägbohrung innerhalb des Außenkragens stellt eine Verbindung mit dem Reifenanschluss her.

Bei den Anschlüssen handelt es sich üblicherweise um gängige Schlauchanschlussarmaturen, die in am Achsgehäuse sowie der Durchführungsmuffe bzw. deren Außenkragen ausgeformte Gewindeaufnahmen eingeschraubt sind.

Die erfindungsgemäße Drehdurchführung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein im Querschnitt dargestelltes Ausführungsbeispiel einer erfindungsgemäßen Drehdurchführung für eine Reifenfüllanlage,
- Fig. 2: eine um 90 Grad gedrehte Darstellung der Drehdurchführung gemäß Fig. 1, und
- Fig. 3: eine Außenansicht eines die Drehdurchführung gemäß Fig. 1 beherbergenden Achsgehäuses.

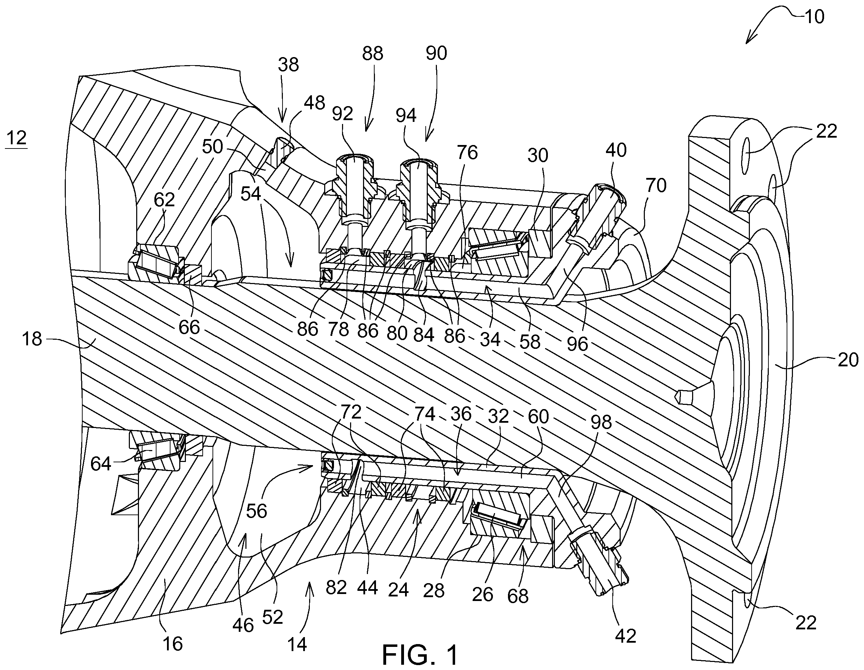

Fig. 1 zeigt ein im Querschnitt dargestelltes Ausführungsbeispiel einer erfindungsgemäßen Drehdurchführung für eine Reifenfüllanlage.

Die Drehdurchführung 10 ist im vorliegenden Fall Bestandteil eines an einem Hinterachsdifferential 12 angebrachten Achstrichters 14 eines nicht dargestellten landwirtschaftlichen Traktors.

Die Drehdurchführung 10 umfasst ein Achsgehäuse 16 und eine in dem Achsgehäuse 16 drehbar gelagerte Radachse 18, beispielsgemäß eine Hinterachse. Die Radachse 18 weist einen Radbefestigungsflansch 20 mit einer Vielzahl von Befestigungsgewinden 22 auf, an dem sich mittels zugehöriger Schraubbolzen eine Radfelge mit einem darauf befindlichen Reifen anbringen lässt (nicht dargestellt). Der Radbefestigungsflansch 20 ist beispielsgemäß einstückiger Bestandteil der Radachse 18, es kann jedoch auch eine zweiteilige Ausbildung vorgesehen sein, bei der der Radbefestigungsflansch 20 entlang der Radachse 18 mittels eines Zahnstangengetriebes (sog. Rack and Pinion-Achse) verstellbar angeordnet ist.

Die Radachse 18 ist zumindest abschnittsweise von einer drehfest mit der Radachse 18 verbundene Durchführungsmuffe 24 aufgenommen. Beide Teile sind kraft- und formschlüssig, mithin luftdicht miteinander verbunden, was beispielsweise durch Pressfügen oder Aufschrumpfen der Durchführungsmuffe 24 auf die Radachse 18 erfolgt.

Die Durchführungsmuffe 24 stützt sich mittels eines Radiallagers 26 gegenüber einem in Richtung des Radbefestigungsflanschs 20 angeordneten Lagersitz 28 innerhalb des Achsgehäuses 16 ab. Ein elastischer Dichtungsring 30 verhindert dabei ein unerwünschtes Eindringen von Feuchtigkeit und/oder Verschmutzungen in das als konisches Wälzlager ausgebildete Radiallager 26.

Des Weiteren sind innerhalb einer zylindrischen Wandung 32 der Durchführungsmuffe 24 verlaufende erste und zweite Druckluftkanäle 34, 36 vorgesehen, die einerseits mit einem an dem Achsgehäuse 16 angebrachten gemeinsamen Druckanschluss 38 und andererseits mit an der Durchführungsmuffe 24 angebrachten ersten und zweiten Reifenanschlüssen 40, 42 kommunizieren. Die beiden Druckluftkanäle 34, 36 sind entlang des Umfangs der zylindrischen Wandung 32 der Durchführungsmuffe 24 einander gegenüberliegend angeordnet.

Genauer gesagt ist die Durchführungsmuffe 24 - wie aus der nachfolgenden Beschreibung im Detail hervorgeht - gegenüber einer angrenzenden zylindrischen Innenseite 44 des Achsgehäuses 16 drehbeweglich derart abgedichtet, dass zwischen dem gemeinsamen Druckanschluss 38 und den beiden Druckluftkanälen 34, 36 eine luftdicht abgeschlossene Verbindungskammer 46 ausgebildet ist.

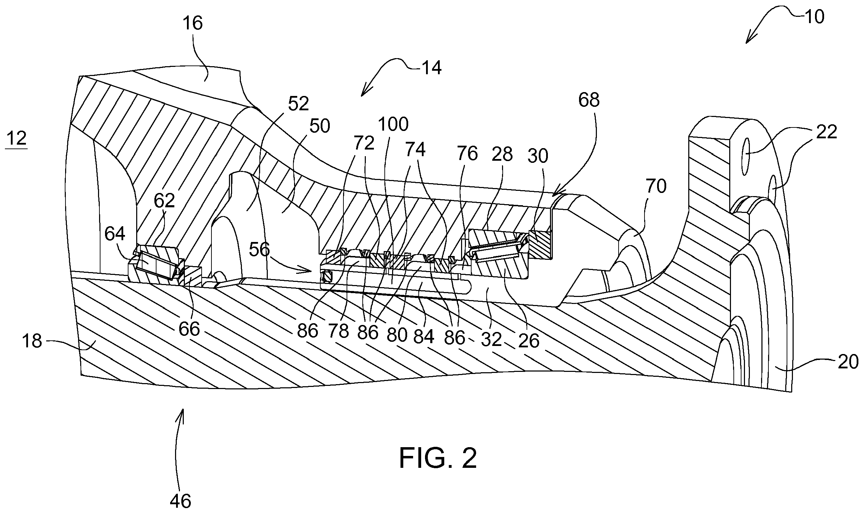

Hierbei ist der als Entlüftungsanschluss 48 ausgebildete gemeinsame Druckanschluss 38 in Gestalt einer entsprechenden Schlauchanschlussarmatur in eine in dem Achsgehäuse 16 ausgeformte Gewindeaufnahme eingeschraubt, die in eine in die Verbindungskammer 46 mündende Durchgangsbohrung 50 übergeht. Dies ist am besten aus der in Fig. 2 um 90 Grad gedrehten Darstellung der Drehdurchführung 10 ersichtlich.

Die Verbindungskammer 46 ist als Hohlraum 52 innerhalb des als Stahlgussteil hergestellten Achsgehäuses 16 ausgebildet und umgibt einen freiliegenden Abschnitt 54 der Radachse 18 torusförmig. Der Hohlraum 52 grenzt an eine innenliegenden Stirnseite 56 der Durchführungsmuffe 24 an, wobei die beiden Druckluftkanäle 34, 36 als an der innenliegenden Stirnseite 56 der Durchführungsmuffe 24 in den Hohlraum 52 mündende Längsbohrungen 58, 60 ausgebildet sind. An den Hohlraum 52 schließt sich ein weiterer Lagersitz 62 zur Aufnahme eines weiteren Radiallagers 64 an, das ebenfalls als konisches Wälzlager ausgebildet ist und der innenliegenden Abstützung der Radachse 18 gegenüber den Achsgehäuse 16 dient. Ein weiterer elastischer Dichtungsring 66 verhindert hierbei einen Austritt von Druckluft in benachbarte Bereiche des Achsgehäuses 16.

Die Durchführungsmuffe 24 erstreckt sich ausgehend von dem Hohlraum 52 in Richtung einer außenliegenden Stirnseite 68 des Achsgehäuses 16 und weist dort einen Außenkragen 70 auf. Der Außenkragen 70 ist einstückiger Bestandteil der als Stahlgussteil hergestellten Durchführungsmuffe 24.

Zur drehbeweglichen Abdichtung der Dichtungsmuffe 24 gegenüber der angrenzenden zylindrischen Innenseite 44 des Achsgehäuses 16 finden beispielsgemäß erste und zweite elastische Dichtungsringpaare 72, 74 Verwendung, wobei diese zwischen einer zylindrischen Außenseite 76 der Durchführungsmuffe 24 und der zylindrischen Innenseite 44 des Achsgehäuses 16 verlaufen und voneinander getrennte erste und zweite Ringkanäle 78, 80 ausbilden, die jeweils mit einem der beiden Druckluftkanäle 34, 36 über zugehörige Verbindungsbohrungen 82, 84 kommunizieren. Die beiden elastischen Dichtungsringpaare 72, 74 werden hierbei mittels zugehöriger Befestigungsringe 86, die in umlaufende Nuten entlang der zylindrischen Außenseite 76 der Durchführungsmuffe 24 eingreifen, in ihrer vorgegebenen Position gehalten. Erste und zweite weitere Druckanschlüsse 88, 90 sind an dem Achsgehäuse 16 angebracht, die in einen jeweiligen der beiden Ringkanäle 78, 80 münden und zugehörige Luftzufuhranschlüsse 92, 94 bilden. Die Luftzufuhranschlüsse 92, 94 sind in Gestalt entsprechender Schlauchanschlussarmaturen in Gewindeaufnahmen, die nebeneinander in dem Achsgehäuse 16 ausgeformt sind, eingeschraubt.

Entsprechendes gilt für die beiden Reifenanschlüsse 40, 42, die von außen leicht zugänglich in dem an der Durchführungsmuffe 24 ausgebildeten Außenkragen 70 angebracht sind. Hierbei ist jeder der beiden Reifenanschlüsse 40, 42 in einem Winkel von etwa 45 Grad gegenüber dem Verlauf der zugehörigen Längsbohrung 58, 60 des Druckluftkanals 34, 36 geneigt. Die Reifenanschlüsse 40, 42 sind in Gestalt entsprechender Schlauchanschlussarmaturen in in dem Außenkragen 70 ausgeformte Gewindeaufnahmen eingeschraubt. Eine in die jeweilige Längsbohrung 58, 60 einmündende Schrägbohrung 96, 98 innerhalb des Außenkragens 70 stellt eine Verbindung mit dem betreffenden Reifenanschluss 40, 42 her.

Zusammenfassend erlaubt es die mittels der beiden elastischen Dichtungsringpaare 72, 74 hergestellte drehbewegliche Abdichtung, dass sich die Durchführungsmuffe 24 gemeinsam mit der Radachse 18 frei innerhalb des Achsgehäuses 16 drehen kann, wobei zugleich über den jeweiligen Druckluftkanal 34, 36 zwischen den Entlüftungs- bzw. Luftzufuhranschlüssen 48, 92, 94 einerseits und den Reifenfüllanschlüssen 40, 42 andererseits eine kontinuierliche Luftaustauschverbindung hergestellt ist.

In Fig. 2 sind weitere Details der Durchführungsmuffe 24 dargestellt. Zu erkennen ist eine von zwei gegenüberliegend innerhalb der zylindrischen Wandung 32 verlaufenden Sackbohrungen 100, die eine Druckausgleichsverbindung zwischen dem Hohlraum 52 und einem das Radiallager 26 umgebenden Bereich herstellen.

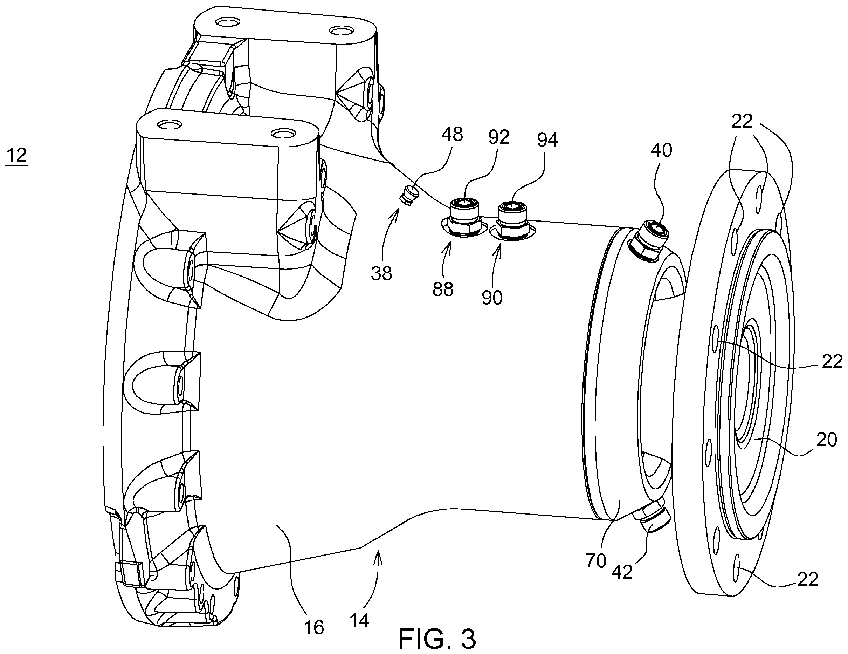

Fig. 3 zeigt eine Außenansicht des die Drehdurchführung 10 beherbergenden Achsgehäuses 16. In am landwirtschaftlichen Traktor eingebautem Zustand sind die Entlüftungs- bzw. Luftzufuhranschlüsse 48, 92, 94 der Drehdurchführung 10 über nicht dargestellte Druckschläuche mit der Reifenfüllanlage verbunden. Weitere Druckschläuche stellen eine Verbindung zwischen den Reifenfüllanschlüssen 40, 42 und dem Fahrzeugreifen bzw. einem von diesem mit der Radfelge umgrenzten Innenvolumen her. Zur Verringerung des Reifenfülldrucks wird Luft über den Entlüftungsanschluss 48 aus dem Fahrzeugreifen abgelassen. Umgekehrt wird der Fahrzeugreifen zur Erhöhung des Reifenfülldrucks über die beiden Luftzufuhranschlüsse 92, 94 mit Luft aus einem von der Reifenfüllanlage umfassten Kompressor befüllt. Die entsprechende Betätigung der Reifenfüllanlage bzw. einer von dieser umfassten Ventilanordnung erfolgt seitens eines in dem landwirtschaftlichen Traktor vorgesehenen Steuergeräts. Eine mögliche konstruktive Umsetzung der Reifenfüllanlage ist beispielsweise in der DE 10 2016 203 689 A1 offenbart.

Der Vollständigkeit halber sei angemerkt, dass die erfindungsgemäße Drehdurchführung auch an einer Vorderachse des landwirtschaftlichen Traktors angeordnet sein kann. Auch kann es sich anstelle eines landwirtschaftlichen Traktors um ein beliebiges anderes Nutzfahrzeug handeln, so zum Beispiel ein landwirtschaftliches Fahrzeug beliebiger Bauart oder eine Bau- bzw. Forstmaschine.

## Patentansprüche

1. Drehdurchführung für eine Reifenfüllanlage, mit einem Achsgehäuse (16) und einer in dem Achsgehäuse (16) drehbar gelagerten Radachse (18), die einen Radbefestigungsflansch (20) zur Anbringung einer Radfelge aufweist, wobei die Radachse (18) zumindest abschnittsweise von einer drehfest mit der Radachse (18) verbundenen Durchführungsmuffe (24) aufgenommen ist, die sich mittels eines Radiallagers (26) gegenüber einem Lagersitz (28) innerhalb des Achsgehäuses (16) abstützt, wobei ein innerhalb einer zylindrischen Wandung (32) der Durchführungsmuffe (24) verlaufender Druckluftkanal (34, 36) vorgesehen ist, der einerseits mit einem an dem Achsgehäuse (16) angebrachten Druckanschluss (38) und andererseits mit einem an der Durchführungsmuffe (24) angebrachten Reifenanschluss (40, 42) kommuniziert, wobei die Durchführungsmuffe (24) gegenüber einer angrenzenden Innenseite (44) des Achsgehäuses (16) drehbeweglich derart abgedichtet ist, dass zwischen dem Druckanschluss (38) und dem Druckluftkanal (34, 36) eine luftdicht abgeschlossene Verbindungskammer (46) ausgebildet ist, **dadurch gekennzeichnet, dass** die Verbindungskammer (46) als an eine innenliegende Stirnseite (56) der Durchführungsmuffe (24) angrenzender Hohlraum (52) innerhalb des Achsgehäuses (16) ausgebildet ist.

2. Drehdurchführung nach Anspruch 1, **dadurch gekennzeichnet, dass** sich die Durchführungsmuffe (24) ausgehend von dem Hohlraum (52) in Richtung einer außenliegenden Stirnseite (68) des Achsgehäuses (16) erstreckt.

3. Drehdurchführung nach Anspruch 1 oder 2, **dadurch gekennzeichnet, dass** ein weiterer Druckanschluss (90, 92) an dem Achsgehäuse (16) angebracht ist, wobei der weitere Druckanschluss (88, 90) in einen mit dem Druckluftkanal (34, 36) kommunizierenden Ringkanal (78, 80) mündet, der durch ein zwischen einer zylindrischen Außenseite (76) der Durchführungsmuffe (24) und einer zylindrischen Innenseite (44) des Achsgehäuses (16) verlaufendes elastisches Dichtungsringpaar (72, 74) gebildet ist.

4. Drehdurchführung nach Anspruch 3, **dadurch gekennzeichnet, dass** weitere innerhalb der zylindrischen Wandung (32) der Durchführungsmuffe (24) verlaufende Druckluftkanäle (34, 36) vorgesehen sind, wobei jedem der Druckluftkanäle (34, 36) ein separater weiterer Druckanschluss (88, 90) und/oder Reifenanschluss (40, 42) zugeordnet ist.

5. Drehdurchführung nach Anspruch 4, **dadurch gekennzeichnet, dass** die Druckluftkanäle (34, 36) entlang des Umfangs der zylindrischen Wandung (32) der Durchführungsmuffe (24) gleichmäßig verteilt angeordnet sind.

6. Drehdurchführung nach wenigstens einem der Ansprüche 1 bis 5, **dadurch gekennzeichnet, dass** der Reifenanschluss (40, 42) in einem an der Durchführungsmuffe (24) ausgebildeten Außenkragen (70) angebracht ist.

7. Reifenfüllanlage zur Anpassung eines in einem Fahrzeugreifen herrschenden Reifenfülldrucks, mit einer Drehdurchführung (10) nach wenigstens einem der Ansprüche 1 bis 6.

## Claims

1. Rotary leadthrough for a tyre inflation system, having an axle housing (16) and a wheel axle (18) which is mounted rotatably in the axle housing (16) and has a wheel fastening flange (20) for attaching a wheel rim, the wheel axle (18) being received at least in sections by a leadthrough sleeve (24) which is connected fixedly to the wheel axle (18) so as to rotate with it and is supported by means of a radial bearing (26) with respect to a bearing seat (28) within the axle housing (16), a compressed air duct (34, 36) which runs within a cylindrical wall (32) of the leadthrough sleeve (24) being provided, which compressed air duct (34, 36) communicates on one side with a pressure connector (38) which is attached to the axle housing (16) and on the other side with a tyre connector (40, 42) which is attached to the leadthrough sleeve (24), the leadthrough sleeve (24) being sealed in a rotationally movable manner with respect to an adjoining inner side (44) of the axle housing (16) in such a way that a connecting chamber (46) which is closed off in an airtight manner is configured between the pressure connector (38) and the compressed air duct (34, 36), **characterized in that** the connecting chamber (46) is configured as a cavity (52) within the axle housing (16), which cavity (52) adjoins an inner end side (56) of the leadthrough sleeve (24).

2. Rotary leadthrough according to Claim 1, **characterized in that**, starting from the cavity (52), the leadthrough sleeve (24) extends in the direction of an outer end side (68) of the axle housing (16).

3. Rotary leadthrough according to Claim 1 or 2, **characterized in that** a further pressure connector (90, 92) is attached to the axle housing (16), the further pressure connector (88, 90) opening into an annular duct (78, 80) which communicates with the compressed air duct (34, 36) and is formed by way of an elastic sealing ring pair (72, 74) which runs between a cylindrical outer side (76) of the leadthrough sleeve (24) and a cylindrical inner side (44) of the axle housing (16).

4. Rotary leadthrough according to Claim 3, **characterized in that** further compressed air ducts (34, 36) which run within the cylindrical wall (32) of the leadthrough sleeve (24) are provided, each of the compressed air ducts (34, 36) being assigned a separate further pressure connector (88, 90) and/or tyre connector (40, 42).

5. Rotary leadthrough according to Claim 4, **characterized in that** the compressed air ducts (34, 36) are arranged in a uniformly distributed manner along the circumference of the cylindrical wall (32) of the leadthrough sleeve (24).

6. Rotary leadthrough according to at least one of Claims 1 to 5, **characterized in that** the tyre connector (40, 42) is attached in an outer collar (70) which is configured on the leadthrough sleeve (24).

7. Tyre inflation system for the adjustment of a tyre inflation pressure which prevails in a vehicle tyre, having a rotary leadthrough (10) according to at least one of Claims 1 to 6.

## Revendications

1. Passage tournant pour une installation de gonflage de pneus, comprenant un carter d'essieu (16) et un essieu de roue (18) monté rotatif dans le carter d'essieu (16), lequel essieu de roue comprend une bride (20) de fixation de roue pour le montage d'une jante de roue, l'essieu de roue (18) étant reçu au moins dans certaines régions par un manchon de passage (24) relié de manière solidaire en rotation à l'essieu de roue (18), lequel le manchon de passage est supporté au moyen d'un palier radial (26) par rapport à un logement de palier (28) à l'intérieur du carter d'essieu (16), un canal d'air comprimé (34, 36) s'étendant à l'intérieur d'une paroi cylindrique (32) du manchon de passage (24) étant prévu, lequel canal d'air comprimé communique d'une part avec un raccord de pression (38) monté sur le carter d'essieu (16) et d'autre part avec un raccord de pneu (40, 42) monté sur le manchon de passage (24), le manchon de passage (24) étant fermé hermétiquement de manière mobile en rotation par rapport à un côté intérieur adjacent (44) du carter d'essieu (16), de telle sorte qu'une chambre de liaison (46) fermée de manière étanche à l'air soit formée entre le raccord de pression (38) et le canal d'air comprimé (34, 36), **caractérisé en ce que** la chambre de liaison (46) est formée en tant que cavité (52) adjacente à un côté frontal intérieur (56) du manchon de passage (24) à l'intérieur du carter d'essieu (16).

2. Passage tournant selon la revendication 1, **caractérisé en ce que** le manchon de passage (24) s'étend à partir de la cavité (52) en direction d'un côté frontal extérieur (68) du carter d'essieu (16).

3. Passage tournant selon la revendication 1 ou 2, **caractérisé en ce qu'**un autre raccord de pression (90, 92) est monté sur le carter d'essieu (16), l'autre raccord de pression (88, 90) débouchant dans un canal annulaire (78, 80) communiquant avec le canal d'air comprimé (34, 36), lequel canal annulaire est formé par une paire de bagues d'étanchéité élastiques (72, 74) s'étendant entre un côté extérieur cylindrique (76) du manchon de passage (24) et un côté intérieur cylindrique (44) du carter d'essieu (16).

4. Passage tournant selon la revendication 3, **caractérisé en ce que** d'autres canaux d'air comprimé (34, 36) s'étendant à l'intérieur de la paroi cylindrique (32) du manchon de passage (24) sont formés, un raccord de pression (88, 90) et/ou un raccord de pneu (40, 42) supplémentaire(s) séparé(s) étant associé(s) à chacun des canaux d'air comprimé (34, 36).

5. Passage tournant selon la revendication 4, **caractérisé en ce que** les canaux d'air comprimé (34, 36) sont disposés de manière répartie uniformément le long de la périphérie de la paroi cylindrique (32) du manchon de passage (24).

6. Passage tournant selon au moins l'une des revendications 1 à 5, **caractérisé en ce que** le raccord de pneu (40, 42) est monté dans un collet extérieur (70) formé sur le manchon de passage (24).

7. Installation de gonflage de pneus servant à adapter une pression de gonflage de pneu régnant dans un pneu de véhicule, comprenant un passage tournant (10) selon au moins l'une des revendications 1 à 6.
